# EUROPÄISCHE PATENTSCHRIFT

(11) **EP 1 699 647 B1**
(45) Veröffentlichungstag und Bekanntmachung des Hinweises auf die Patenterteilung: **30.07.2008**
(21) Anmeldenummer: 04790547.6
(22) Anmeldetag: 11.10.2004
(51) Int. Cl.: B60C 23/04

(54) **VERFAHREN UND VORRICHTUNG ZUR ELEKTRONISCHEN REIFENDRUCKKONTROLLE**
METHOD AND DEVICE FOR ELECTRONICALLY CHECKING A TIRE PRESSURE
PROCEDE ET DISPOSITIF DE CONTROLE ELECTRONIQUE DE LA PRESSION DES PNEUS

(30) Priorität: 17.10.2003 DE 10349003
(43) Veröffentlichungstag der Anmeldung: 13.09.2006
(73) Patentinhaber: Volkswagen AG, 38436 Wolfsburg (DE)
(72) Erfinder: GIER, Klaus-Jürgen, 31804 Braunschweig (DE); ANDERS, Peter, Otto, 38442 Wolfsburg (DE)
(74) Vertreter: Patentanwälte Bressel und Partner
(86) Internationale Anmeldenummer: PCT/EP2004/011714
(87) Internationale Veröffentlichungsnummer: WO 2005/037577

(56) Entgegenhaltungen:
- DE-A- 3 539 489
- DE-A- 10 140 436
- DE-A- 10 237 699
- US-A- 4 909 074
- US-A- 5 827 957

## Beschreibung

Die Erfindung betrifft ein Verfahren und eine Vorrichtung zur elektronischen Reifendruckkontrolle.

Aus der DE 102 37 699 A1 sind ein Verfahren und eine Vorrichtung zur elektronischen Unterstützung einer manuellen Reifendruckkontrolle für ein Kraftfahrzeug bekannt, mit radseitigen Sensoren für Reifenluftdruck und Temperatur sowie einem drahtlosen Überträger für die von den Sensoren abgegebenen Messwerte auf ein karosseriefestes zentrales Steuergerät. Von dem Steuergerät werden eingestellte Soll-Drücke bereitgestellt. Die Soll-Drücke sowie anliegende Ist-Drücke werden auf einer Bedienanzeige dargestellt. Dadurch ist eine Überwachung durch einen Fahrer einfach durchführbar. Werden die Soll-Drücke zum Zeitpunkt der Überwachung auf die aktuelle Ist-Temperatur umgerechnet, so ist es für den Fahrer auch bei durch die Fahrt erwärmten Fahrzeugreifen sehr einfach, einen Soll-Druck festzustellen und einen Befülldruck einzustellen, der dem Soll-Druck bei einer Referenztemperatur entspricht.

Aus der US-4,909,074 ist eine Vorrichtung zur elektronischen Reifendruckkontrolle bekannt, umfassend eine Radelektronik, mittels derer mindestens ein Ist-Druck in einem Fahrzeugreifen bestimmbar ist, ein zentrales Steuergerät, eine Speichereinheit, in welcher mindestens ein Soll-Druck bei Referenzbedingungen ablegbar ist, wobei durch das zentrale Steuergerät der in der Speichereinheit abgelegte Soll-Druck auf einem Soll-Druck bei einer ermittelten Betriebsbedingung umrechenbar ist, und mindestens eine akustische und/oder optische Ausgabeeinheit, wobei die ermittelte Betriebsbedingung mindestens abhängig von einer mittleren Außentemperatur ist, die Differenz zwischen dem Ist-Druck und dem Soll-Druck bei Betriebsbedingung mindestens quantitativ durch das Steuergerät bewertbar ist, wobei mindestens kritische und unkritische Differenzen unterscheidbar sind, und mindestens kritische Differenzen durch die Ausgabeeinheit darstellbar sind. Die Außentemperaturen werden dabei nur während des Betriebes des Fahrzeuges erfasst und bei der Mittelung berücksichtigt.

Ausgehend von diesem Stand der Technik liegt der Erfindung das technische Problem zugrunde, ein Verfahren und eine Vorrichtung zur verbesserten Bestimmung der Soll-Drücke für eine elektrische Reifendruckkontrolle unter Berücksichtigung der mittleren Außentemperatur zu schaffen.

Die Lösung des technischen Problems ergibt sich durch die Gegenstände mit den Merkmalen der Patentansprüche 1 und 15. Weitere vorteilhafte Ausgestaltungen der Erfindung ergeben sich aus den Unteransprüchen.

Hierfür werden bei Referenzbedingungen gegebene Soll-Drücke auf Soll-Drücke bei Betriebsbedingungen umgerechnet, Ist-Drücke an dem oder den Reifen erfasst und Differenzen zwischen Ist-Drücken und Soll-Drücken bei Betriebsbedingungen mindestens qualitativ bewertet, wobei mindestens kritische und unkritische Differenzen unterschieden werden. Liegen kritische Differenzen an, so sind diese an einer optischen und/oder akustischen Anzeigeeinheit darstellbar. Die Betriebsbedingungen werden mindestens in Abhängigkeit einer mittleren Außentemperatur ermittelt. Eine Mittelung erfolgt vorzugsweise über einen begrenzten Zeitraum, beispielsweise einen Zeitraum von 1-3 Wochen. Reifen-Druck und Temperatur stehen in einem unmittelbaren Zusammenhang. Wird beispielsweise als Betriebsbedingung eine Temperatur von 20° ermittelt und das Fahrzeug anschließend bei einer Außentemperatur von -30° betrieben, so sinkt der tatsächliche Luftdruck aufgrund dieser extremen Abkühlung um 0,5 bar. Dadurch ergeben sich auch andere Soll-Drücke. Theoretisch ist es denkbar, aktuelle Außentemperaturen als Betriebsbedingung heranzuziehen und zugehörige Soll-Drücke zu ermitteln. Dies erfordert jedoch einen hohen Rechenaufwand, da Außentemperaturen variieren. So können beispielsweise die Temperaturen in Straßentunnels von den allgemein herrschenden Außentemperaturen abweichen. Eine ständige Anpassung an derartige Variationen erscheint jedoch nicht sinnvoll. Daneben ist es denkbar, eine Betriebstemperatur bei einer Initialisierung der Reifendruckkontrolle zu erfassen. Die Initialisierung erfolgt jedoch vorzugsweise automatisch beim Starten des Fahrzeugs. Sind Fahrzeuge in Garagen etc. abgestellt, so entspricht die bei einer Initialisierung erfasste Außentemperatur nicht den zu erwartenden Außentemperaturen. Die gemittelte Außentemperatur gibt dagegen realistische Einsatzbedingungen der nahen Vergangenheit an. Für eine Erfassung der Außentemperatur sind bereits im Fahrzeug integrierte Temperaturfühler einsetzbar. Dadurch ist eine besonders kostengünstige Umsetzung möglich.

Fahrzustände liegen vor, wenn eine bestimmte Fahrgeschwindigkeit, beispielsweise zwischen 7 - 20 km/h, überschritten wird. Im Stand ermittelte Temperaturen sind oftmals nicht repräsentativ. Zum Beispiel können andere Fahrzeuge die Messungen verfälschen, Temperaturen an Standorten wie Garagen und/oder Werkstätten deutlich von herrschenden Außentemperaturen abweichen etc. Daher werden ausschließlich Temperaturen bei Fahrzeuggeschwindigkeiten größer einer Grenzgeschwindigkeit zur Ermittlung der mittleren Außentemperatur herangezogen. Ergänzend kann neben der Fahrzeuggeschwindigkeit die Fahrzeit berücksichtigt werden, so dass beispielsweise erst die Temperaturen nach einer Fahrzeug von einigen Minuten berücksichtigt werden.

In einer bevorzugten Ausführungsform wird eine Ist-Temperatur des Fahrzeugreifens erfasst und der erfasste Ist-Druck auf einen Ist-Druck bei Betriebsbedingungen (gemittelte Außentemperatur) umgerechnet. Durch die Belastung der Reifen während der Fahrt kommt es zu einer Erwärmung. Diese Temperatur wird vorzugsweise für eine Überwachung des Reifendrucks kompensiert. Dadurch ist eine Reifenfüllkontrolle jederzeit durchführbar.

In einer weiteren bevorzugten Ausführungsform wird für eine Ermittlung des Soll-Drucks unter Betriebsbedingungen zwischen einem Volllast- und einem Teillastbetrieb unterschieden. Vorzugsweise sind Soll-Drücke unter für unterschiedliche Belastungszustände in der Speichereinheit abgelegt. Daneben ist es auch denkbar, nur einen Soll-Druck sowie einen Faktor für eine Umrechnung abzulegen. Der Faktor wird im Regelfall konstant gewählt. Es ist jedoch denkbar, einen temperaturabhängigen Faktor zu berücksichtigen.

In einer weiteren bevorzugten Ausführungsform wird die Betriebsbedingung Volllast oder Teillast manuell durch einen Taster vorgegeben. Daneben ist es auch denkbar, eine Last beispielsweise durch geeignete Sensorik zu erkennen. Eine geeignete Sensorik sind beispielsweise die Luftfedern. Alternativ kann auch durch die erfassten Ist-Drücke automatisch zwischen Teillast und Volllast unterschieden werden. Springt beispielsweise der Ist-Druck an der Hinterachse von 2,5 auf 3 bar, so kann daraus auf eine Änderung von Teillast auf Volllast geschlossen werden.

In einer weiteren bevorzugten Ausführungsform wird der Soll-Druck bei Betriebsbedingung in Abhängigkeit eines verwendeten Reifensatzes ermittelt.

Unterschiedliche Reifen verlangen gegebenenfalls unterschiedliche Soll-Drücke. Vorzugsweise sind mindestens zwei unterschiedliche Reifensätze berücksichtigt. Dabei ist es denkbar, nur einen Reifensatz in der Speichereinheit zu ermitteln und Daten für den zweiten Reifensatz in Abhängigkeit des ersten Reifensatzes zu berechnen. Da ein Wechsel zwischen unterschiedlichen Reifen im Regelfall jedoch längerfristig erfolgt - beispielsweise saisonweise - werden vorzugsweise die Daten für beide Reifensätze in der Speichereinheit abgelegt. Dabei ist es auch möglich, dass alle für einen Fahrzeugtyp zugelassenen Reifensätze die gleichen Solldrücke aufweisen. In diesem Fall müssen nur spezielle Reifensätze hinsichtlich des Solldrucks eingespeichert werden. Eine Einrichtung und/oder eine Aktualisierung von derartigen Reifendatensätze in der Speichereinheit erfolgt vorzugsweise in einer Werkstatt und/oder durch einen Kundendienst.

In einer bevorzugten Ausführungsform werden grenzwertige Differenzen erkannt und dargestellt. Grenzwertige Differenzen verlangen keinen sofortigen Eingriff durch den Fahrer und/oder einen Kundendienst. Sie weisen jedoch den Fahrer darauf hin, dass Unregelmäßigkeiten auftreten und für eine Leistungsverbesserung, wie beispielsweise Fahrdynamik, des Fahrzeugs eine Regulierung des Reifendrucks vorteilhaft sein könnte.

In einer weiteren bevorzugten Ausführungsform wird die optische und/oder akustische Ausgabeeinheit in einer zentralen Anzeige- und Bedieneinheit integriert, so dass zusätzliche dezentrale Ausgabeeinheiten eingespart werden können. Eine akustische Warnung einer kritischen Differenz erfolgt vorzugsweise durch anhaltende oder in Intervallen auftretende Warnsignale. Grenzwertige Differenzen sind dagegen auch durch Einzelwarntöne anzeigbar. Die optische Darstellung erfolgt beispielsweise durch eine farbige Darstellung. Hierfür werden vorzugsweise vertraute Farben, wie rot, gelb, grün zur Kennzeichnung eingesetzt.

In einer weiteren bevorzugten Ausführungsform werden die Betriebsbedingungen optisch an der Anzeige- und Bedieneinheit und/oder an dem Kombiinstrument angezeigt. Dadurch sind Einstellungen, wie Voll- oder Teillast oder ein gewählter Reifensatz einfach überprüfbar.

In einer weiteren bevorzugten Ausführungsform ist mindestens ein Kaltfülldruck numerisch auf der Ausgabeeinheit darstellbar. Weitere Daten für eine numerische Ausgabe sind beispielsweise aktuelle Reifenzustände, umfassend lst-Temperatur und Ist-Druck.

In einer weiteren bevorzugten Ausführungsform ist einer Radelektronik ein HF-Sender zugeordnet, der die Daten an eine karosserieseitig angeordnete Antenne sendet. Von der Antenne werden die Daten dann vorzugsweise per Kabel zum zentralen Steuergerät übertragen. Der Vorteil einer HF-Strecke gegenüber einer induktiven Ankopplung ist dabei insbesondere die höhere Reichweite, so dass eine Antenne ausreichend für den Empfang aller Daten ist. Aus Sicherheitsgründen kann eine Redundanz gefordert werden. Es ist auch denkbar, jedem Sender eine eigene Antenne zuzuordnen.

Den Radelektroniken wird jeweils ein lokaler Energiespeicher zugeordnet, der die Energieversorgung der Radelektronik und des HF-Senders bildet. Der Energiespeicher ist vorzugsweise als Li-Batterie ausgebildet, die verhältnismäßig leicht ist und eine lange Lebensdauer aufweist. Vorzugsweise wird der Ladezustand des Energiespeichers erfasst und ebenfalls an das zentrale Steuergerät übertragen. Alternativ zur Batterie können auch Piezoelemente oder Induktionseinrichtungen verwendet werden, die die Eigenbewegung des Reifens in elektrische Energie umwandeln.

In einer weiteren bevorzugten Ausführungsform erfolgt eine automatische Eigenraderkennung, wozu die Fahrzeugreifen jeweils zusätzlich einen Identifier an das Steuergerät übertragen. Daneben ist es auch denkbar, dass beispielsweise bei einem Reifenwechsel eine manuelle Einstellung des Radsatzes am Steuergerät erfolgt.

In einer weiteren bevorzugten Ausführungsform ist der Antenne eine Empfangscharakteristik-Auswerteeinheit zugeordnet, aus deren Signalen eine Position der Fahrzeugreifen ableitbar ist. Dabei ist es beispielsweise denkbar, das jeder Fahrzeugreifen periodisch sendet und jedem Fahrzeugreifen ein bestimmter Sendezeitraum zugeordnet ist. Darüber hinaus kann durch eine Auswertung der Empfangspegel an der Antenne die Position der einzelnen Fahrzeugreifen ermittelt werden.

In einer weiteren bevorzugten Ausführungsform wird der Sendezyklus der Radelektroniken in Abhängigkeit des erfassten Druckverlustes verändert, wobei bei schnellen Druckverlusten in einem schnelleren Sendezyklus umgeschaltet wird.

Die Erfindung wird nachfolgend anhand eines bevorzugten Ausführungsbeispieles näher erläutert. Die Fig. zeigen:
- Fig. 1:: ein schematisches Blockschaltbild einer Vorrichtung zur elektronischen Reifendruckkontrolle und
- Fig. 2:: eine Anzeige für eine Reifendruckkontrolle.

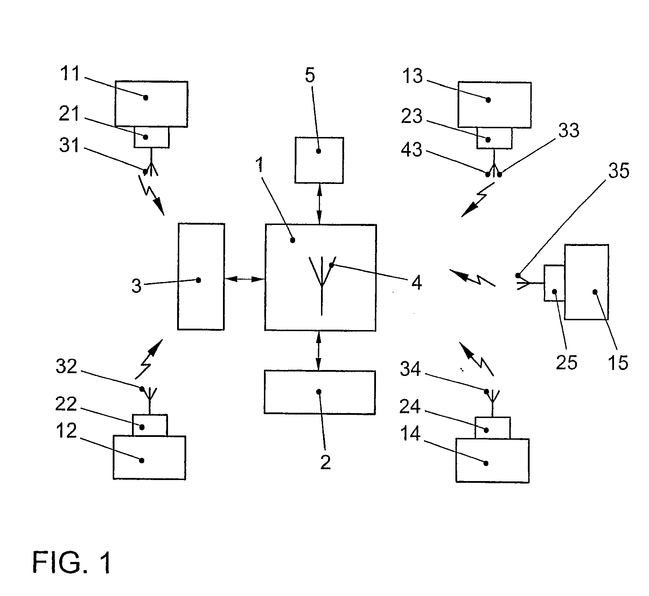

In der Fig. 1 ist ein schematisches Blockschaltbild einer Vorrichtung zur elektronischen Reifendruckkontrolle dargestellt. Die Vorrichtung umfasst ein zentrales Steuergerät 1, das mit einer zentralen Anzeige- und Bedieneinrichtung 2, einer Speichereinheit 3 und einem Taster 5 verbunden ist. Jedem der vier Laufräder 11-14 und einem Reserverad 15 ist eine Radelektronik 21-25 zugeordnet, die im inneren der Fahrzeugreifen 11-15 Temperatur und Druck misst. Die Radelektroniken 21-25 sind jeweils mit einem HF-Sender mit zugehöriger Antenne 31-35 ausgebildet. Die Signale der HF-Sender werden von einer Empfangs-Antenne 4 empfangen. Die Empfangs-Antenne 4 ist signaltechnisch mit dem Steuergerät 1 verbunden. Alle Komponenten können über ein Bus-System, insbesondere ein CAN-Bussystem miteinander verbunden sein, so dass die ermittelten Ist-Drücke auch anderen Steuergeräten wie beispielsweise einer Niveauregulierung und/oder einem ESP zur Verfügung stehen. Vorzugsweise erfolgt die Anbindung des Tasters 5 nicht über CAN, sondern der Taster 5 ist fest mit dem Steuergerät 1 verdrahtet.

Der Taster 5 kann mit einer Ausschaltfunktion überlagert werden. Durch langes Drücken, beispielsweise für einen Zeitraum zwischen 25 und 35 Sekunden, ist dabei eine Reifenkontrolle durch den Nutzer aktivierbar oder deaktivierbar. Des Weiteren ist auch eine automatische Abschaltung möglich, beispielsweise wenn über eine vorgegebene Zeit keine IDs mehr empfangen werden. Dies lässt dann auf einen Reifensatz ohne Radelektronik schließen, so dass eine Reifendruckkontrolle nicht mehr möglich wäre.

In der Speichereinheit 3 sind Soll-Drücke für zwei komplette Radsätze abgelegt. Das Ablegen der Datensätze erfolgte am Bandende, nachdem die Festlegung auf bestimmte Radsätze für ein Fahrzeug abgeschlossen ist. Eine spätere durchzuführende Aktualisierung der Daten erfolgt vorzugsweise durch einen autorisierten Kundendienst. Die Radsätze sind durch Identifier der Radelektroniken gekennzeichnet. Für beide Radsätze sind Soll-Drücke unter Volllast sowie unter Teillast abgelegt. Durch den Taster 5 ist durch einen Nutzer festlegbar, ob Soll-Drücke unter Voll- oder Teillast der Reifendruckkontrolle zugrunde gelegt werden sollen. Der Taster 5 ist als RDK (Reifen-Druck-Krontrolle) -Taster ausgebildet, so dass aufgrund der Funktionsbeleuchtung der gewählte Lastbetrieb erkennbar ist. Die Soll-Drücke werden unter Referenzbedingungen beispielsweise in Fahrversuchen oder aus Erfahrungswerten ermittelt. Ermittelte Betriebsbedingungen weichen meistens von den Referenzbedingungen ab. Die Soll-Drücke bei Referenzbedingungen werden daher auf Soll-Drücke bei Betriebsbedingungen normiert. Die Betriebsbedingung ist geprägt durch eine Betriebstemperatur. Die Betriebstemperatur ergibt sich aus einer über einen festgelegten Zeitraum gemittelten Einsatztemperatur. Geeignete Zeiträume liegen beispielsweise zwischen 1 Woche und 1 Monat, insbesondere 14 Tage. Dies entspricht dem Zeitintervall, der von den Reifenherstellern für eine manuelle Kontrolle der Reifendrücke empfohlen wird. Je nach Anwendungsgebiet sind jedoch auch andere Zeiträume zweckmäßig. Zur Ermittlung der Einsatztemperatur werden ausschließlich Werte herangezogen, die bei Geschwindigkeiten größer einer Schrittgeschwindigkeit gemessen wurden. Dadurch wird der Einfluss nicht repräsentativer Werte, die beispielsweise in Tiefgaragen, Werkstätten etc. gemessen wurden, auf die ermittelte Betriebstemperatur verringert. Des Weiteren können aktuelle Temperaturen stärker berücksichtigt werden als früher. Die Grenzwerte für eine Berücksichtigung von Geschwindigkeiten sind ebenfalls stark anwendungsabhängig.

Der Ist-Druck eines Fahrzeugreifens 11-15 wird durch die zugehörige Radelektronik 21-25 ermittelt. Jede Radelektronik 21-25 sendet periodisch in einem bestimmten Sendezyklus von beispielsweise einer Minute die erfasste Temperatur und den Druck seines Fahrzeugreifens 11-15 einschließlich eines Identifiers. Anhand dieser Identifier kann das Steuergerät 1 eine Eigenraderkennung durchführen. Hierzu wird beispielsweise über eine gewisse Zeit ausgewertet, welche Identifier wie oft empfangen werden, so dass die eigenen Räder von denen anderer Fahrzeuge unterschieden werden können. Somit erkennt die Vorrichtung auch automatisch, falls ein oder mehrere neue Fahrzeugreifen montiert wurden. Die Eigenraderkennung erfolgt vorzugsweise nur im Fahrbetrieb, um nicht durch die Signale anderer parkender Fahrzeuge gestört zu werden. Anhand des Identifiers wird der entsprechende Radsatz der Speichereinheit 3 gewählt.

Des weiteren erfolgt im Steuergerät 1 eine Positionszuordnung. Hierzu stehen verschiedene Möglichkeiten zur Verfügung. Im einfachsten Fall erfolgt dies über eine statistische Auswertung der Empfangspegel, da der Empfangspegel einer Radelektronik abhängig von der relativen Lage zur Empfangs-Antenne 4 ist. Für eine verbesserte Zuordnung ist außerdem der Empfangs-Zeitpunkt auswertbar.

In dem Steuergerät 1 werden dann die Ist-Drücke bei der Ist-Temperatur (aktuelle Reifentemperatur) auf Ist-Drücke bei einer Betriebstemperatur (gemittelte Außentemperatur) normiert und mit den ebenfalls normierten Soll-Drücken verglichen. Werden diese Soll-Drücke unterschritten bzw. werden bestimmte Kriterien nicht eingehalten, so kommt es zu einer Warnung, die über die Anzeige- und Bedieneinheit 2 angezeigt wird und gegebenenfalls noch durch eine akustische Warnung ergänzt wird.

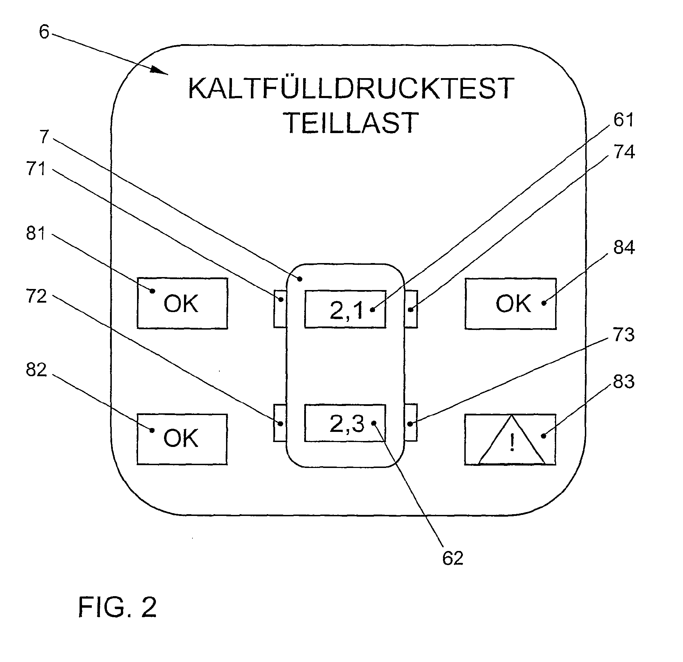

Fig. 2 zeigt eine Darstellung der Reifendruckkontrollergebnisse auf der Anzeige- und Bedieneinheit. In einem Textfeld 6 sind Betriebsbedingungen wiedergegeben. Für die dargestellten Ergebnisse wurde ein Kaltfülldruck unterTeillast untersucht. Die Soll-Drücke unter Betriebsbedingungen sind in den numerischen Anzeigen 61 und 62 für Vorder- bzw. Hinterreifen wiedergegeben. Die Darstellung zeigt weiter ein Piktogramm für ein Fahrzeug 7 mit vier Reifen 71-74. Jedem Reifen ist ein Kontrollkasten 81-84 zugeordnet. Die Kontrollkästen zeigen anhand von Piktogrammen, ob der ermittelte Reifendruck in Ordnung ist oder nicht. Ist der Reifendruck in Ordnung, so zeigt das Piktogramm ein OK, siehe Kontrollkästen 81, 82, 84, andernfalls ist das Vorliegen einer Unregelmäßigkeit durch ein Ausrufezeichen dargestellt, siehe Kontrollkasten 83. Als Unregelmäßigkeiten werden kritische und grenzwertige Zustände unterschieden. Kritische Zustände verlangen einen sofortigen Eingriff, während grenzwertige Zustände lediglich eine Warnfunktion besitzen. Die Unterscheidung in der Darstellung ist beispielsweise durch Farben, Blinken und/oder durch zusätzliche akustische Signale möglich.

Vorzugsweise wird das Reserverad durch die elektronische Reifendruckkontrolle überwacht auf eine Darstellung der Kontrollergebnisse auf der Anzeige- und Bedieneinheit jedoch im Regelfall verzichtet. Führt die Reifendruckkontrolle des Reserverads zu einem negativen Prüfergebnis, so wird der Fahrer vorzugsweise durch geeignete Maßnahmen benachrichtigt.

## Patentansprüche

1. Vorrichtung zur elektronischen Reifendruckkontrolle, umfassend eine Radelektronik, mittels derer mindestens ein Ist-Druck in einem Fahrzeugreifen bestimmbar ist, ein zentrales Steuergerät, eine Speichereinheit, in welcher mindestens ein Soll-Druck bei Referenzbedingungen abgelegt ist, wobei durch das zentrale Steuergerät der in der Speichereinheit abgelegte Soll-Druck auf einen Soll-Druck bei einer ermittelten Betriebsbedingung umgerechnet wird, und mindestens eine akustische und/oder optische Ausgabeeinheit, wobei die ermittelte Betriebsbedingung mindestens abhängig von einer mittleren Außentemperatur ist,
die Differenz zwischen dem Ist-Druck und dem Soll-Druck bei Betriebsbedingung mindestens qualitativ durch das Steuergerät (1) bewerted wird, wobei mindestens kritische und unkritische Differenzen unterscheidbar sind, und
mindestens kritische Differenzen durch die Ausgabeeinheit dargestellt werden,
**dadurch gekennzeichnet, dass**
ausschließlich Temperaturen bei Fahrzeuggeschwindigkeiten größer einer Grenzgeschwindigkeit zur Ermittlung der mittleren Außentemperatur herangezogen werden.

2. Vorrichtung nach Anspruch 1, **dadurch gekennzeichnet, dass** die Radelektronik (21-25) eine Ist-Temperatur des Reifens erfasst und der lst-Druck bei Ist-Temperatur auf einen Ist-Druck bei Betriebsbedingungen umgerechnet wird.

3. Vorrichtung nach einem der Ansprüche 1 oder 2, **dadurch gekennzeichnet, dass** der Soll-Druck bei Betriebsbedingung in Abhängigkeit von einer Belastung ermittelt wird, wobei mindestens ein Volllast- und ein Teillastbetrieb unterscheidbar sind.

4. Vorrichtung nach Anspruch 3, **dadurch gekennzeichnet, dass** durch einen Taster (5) die Betriebsbedingungen Volllast oder Teillast festlegbar sind.

5. Vorrichtung nach einem der vorangegangenen Ansprüche, **dadurch gekennzeichnet, dass** in der Speichereinheit (3) Soll-Drücke für mindestens zwei unterschiedliche Reifensätze abgelegt sind und der Soll-Druck bei Betriebsbedingung in Abhängigkeit des Reifensatzes ermittelt wird.

6. Vorrichtung nach einem der vorangegangenen Ansprüche, **dadurch gekennzeichnet, dass** grenzwertige Differenzen erkannt und dargestellt werden.

7. Vorrichtung nach einem der genannten Ansprüche, **dadurch gekennzeichnet, dass** die Ausgabeeinheit in einer zentralen Anzeige- und Bedieneinheit (2) und/oder im Kombiinstrument integriert ist.

8. Vorrichtung nach Anspruch 7, **dadurch gekennzeichnet, dass** die Betriebsbedingungen durch die zentrale Anzeige- und Bedieneinheit (2) und/oder das Kombiinstrument dargestellt werden.

9. Vorrichtung nach einem der genannten Ansprüche, **dadurch gekennzeichnet, dass** mindestens ein Kaltfülldruck numerisch dargestellt wird.

10. Vorrichtung nach einem der genannten Ansprüche, **dadurch gekennzeichnet, dass** die Radelektronik (21-25) mit einem HF-Sender ausgebildet ist, wobei mindestens den verbauten Fahrzeugreifen (11-14) mindestens eine Antenne (4) zugeordnet ist, deren empfangenen Daten an das zentrale Steuergerät (1) übertragbar sind.

11. Vorrichtung nach Anspruch 10, **dadurch gekennzeichnet, dass** der Radelektronik (21-25) ein lokaler Energiespeicher zugeordnet ist.

12. Vorrichtung nach Anspruch 11, **dadurch gekennzeichnet, dass** die Radelektronik (21-25) den Ladezustand des Energiespeichers an die Antenne (4) überträgt.

13. Vorrichtung nach einem der Ansprüche 10 bis 12, **dadurch gekennzeichnet, dass** die Radelektroniken (21-25) einen Identifier übertragen, mittels dessen durch das zentrale Steuergerät (1) einen Eigenraderkennung durchführbar ist.

14. Vorrichtung nach Anspruch 13, **dadurch gekennzeichnet, dass** der Antenne (4) eine Empfangscharakteristik-Auswerteeinheit zugeordnet ist, aus deren Signalen eine Position der Fahrzeugreifen (11-15) ableitbar ist.

15. Verfahren zur elektronischen Reifendruckkontrolle, wobei mindestens ein Ist-Druck in einem Fahrzeugreifen bestimmt wird und ein Soll-Druck bei Referenzbedingungen auf einen Soll-Druck bei einer ermittelten Betriebsbedingung umgerechnet wird, wobei die Betriebsbedingung mindestens in Abhängigkeit einer mittleren Außentemperatur ermittelt wird,
die Differenz zwischen dem Ist-Druck und dem Soll-Druck bei Betriebsbedingung mindestens qualitativ bewertet wird, wobei mindestens kritische und unkritische Differenzen unterscheidbar sind, und
mindestens kritische Differenzen akustische und/oder optische dargestellt werden,
**dadurch gekennzeichnet, dass**
ausschließlich Temperaturen bei Fahrzeuggeschwindigkeiten größer einer Grenzgeschwindigkeit zur Ermittlung der mittleren Außentemperatur herangezogen werden.

16. Verfahren nach Anspruch 15, **dadurch gekennzeichnet, dass** eine Ist-Temperatur des Reifens erfasst wird und der Ist-Druck bei Ist-Temperatur auf einen Ist-Druck bei Betriebsbedingungen umgerechnet wird.

17. Verfahren nach einem der Ansprüche 15 oder 16, **dadurch gekennzeichnet, dass** der Soll-Druck bei Betriebsbedingung in Abhängigkeit von einer Belastung ermittelt wird, wobei mindestens ein Volllast- und ein Teillastbetrieb unterschieden werden.

18. Verfahren nach einem der Ansprüche 15 bis 17, **dadurch gekennzeichnet, dass** in einer Speichereinheit (3) Soll-Drücke für mindestens zwei unterschiedliche Reifensätze abgelegt werden und der Soll-Druck bei Betriebsbedingung in Abhängigkeit des Reifensatzes der Speichereinheit (3) ermittelt wird.

19. Verfahren nach einem der Ansprüche 15 bis 18, **dadurch gekennzeichnet, dass** grenzwertige Differenzen erkannt und dargestellt werden.

20. Verfahren nach einem der Ansprüche 15 bis 19, **dadurch gekennzeichnet, dass** die Betriebsbedingungen optisch dargestellt werden.

21. Verfahren nach einem der Ansprüche 15 bis 20, **dadurch gekennzeichnet, dass** mindestens ein Kaltfülldruck numerisch darstellbar ist.

22. Verfahren nach einem der Ansprüche 15 bis 21, **dadurch gekennzeichnet, dass** die Radelektronik die Ist-Temperatur und die Ist-Drücke drahtlos an das zentrale Steuergerät (1) übertragen.

23. Verfahren nach Anspruch 22, **dadurch gekennzeichnet, dass** die Radelektroniken (21- 25) zusätzlich einen Identifier übertragen.

24. Verfahren nach Anspruch 23, **dadurch gekennzeichnet, dass** das zentrale Steuergerät (1) aus den gesendeten Identifier die vorhandenen Fahrzeugreifen (11-15) identifiziert und aus den Signaldaten eine Position der identifizierten Fahrzeugreifen (11-15) ermittelt.

25. Verfahren nach einem der Ansprüche 15 bis 24, **dadurch gekennzeichnet, dass** die Radelektroniken (21-25) zusätzlich den Ladezustand eines zugeordneten lokalen Energiespeichers an das zentrale Steuergerät (1) übertragen.

26. Verfahren nach einem der Ansprüche 15 bis 25, **dadurch gekennzeichnet, dass** der Sendezyklus der Radelektroniken (21-25) bei schnellen Druckverlusten erhöht wird.

## Claims

1. Device for electronically checking a tyre pressure, comprising a wheel electronic system by means of which at least one actual pressure in a vehicle tyre can be determined, a central control device, a memory unit in which at least one setpoint pressure under reference conditions is stored, wherein the central control unit converts the setpoint pressure which is stored in the memory unit to a setpoint pressure under an operating condition which is determined, and at least one acoustic and /or visual output unit, wherein the operating condition which is determined is at least dependent on an average outside temperature, the difference between the actual pressure and the setpoint pressure under the operating condition being evaluated at least qualitatively by means of the control device (1), wherein at least critical and noncritical differences can be differentiated, and at least critical differences are indicated or displayed by means of the output unit, **characterized in that** temperatures at vehicle speeds which are higher than a limiting speed are used exclusively for the determination of the average outside temperature.

2. Device according to Claim 1, **characterized in that** the wheel electronic system (21-25) acquires an actual temperature of the tyre, and the actual pressure at the actual temperature is converted to an actual pressure under operating conditions.

3. Device according to one of Claims 1 or 2, **characterized in that** the setpoint pressure under the operating condition is determined as a function of a load, wherein at least one full-load mode and one partial-load mode can be differentiated.

4. Device according to Claim 3, **characterized in that** the operating conditions of full load or partial load can be defined by means of a pushbutton key (5).

5. Device according to one of the preceding claims, **characterized in that** setpoint pressures for at least two different sets of tyres are stored in the memory unit (3), and the setpoint pressure under the operating condition is determined as a function of the set of tyres.

6. Device according to one of the preceding claims, **characterized in that** differences in limiting values are detected and indicated or displayed.

7. Device according to one of the aforesaid claims, **characterized in that** the output unit is integrated in a central display and operator control unit (2) and/or in the combination instrument.

8. Device according to Claim 7, **characterized in that** the operating conditions are indicated or displayed by means of the central display and operator control unit (2) and/or the combination instrument.

9. Device according to one of the aforesaid claims, **characterized in that** at least one cold inflation pressure is indicated or displayed numerically.

10. Device according to one of the aforesaid claims, **characterized in that** the wheel electronic system (21-25) is embodied with an RF transmitter, wherein at least one antenna (4) is assigned to at least the fitted vehicle tyres (11-14), the received data of which antenna (4) can be transmitted to the central control device (1).

11. Device according to Claim 10, **characterized in that** a local energy store is assigned to the wheel electronic system (21-25).

12. Device according to Claim 11, **characterized in that** the wheel electronic system (21-25) transmits the charge state of the energy store to the antenna (4).

13. Device according to one of Claims 10 to 12,
**characterized in that** the wheel electronic systems (21-25) transmit an identifier by means of which the central control device (1) can detect wheels assigned to it.

14. Device according to Claim 13, **characterized in that** the antenna (4) is assigned a reception characteristic evaluation unit from whose signals a position of the vehicle tyres (11-15) can be derived.

15. Method for electronically checking a tyre pressure, wherein at least one actual pressure is determined in a vehicle tyre and a setpoint pressure under reference conditions is converted to a setpoint pressure under an operating condition which is determined, wherein the operating condition is determined at least as a function of an average outside temperature, the difference between the actual pressure and the setpoint pressure under the operating condition being evaluated at least qualitatively, wherein at least critical and non-critical differences can be differentiated, and at least critical differences are indicated or displayed acoustically and/or visually, **characterized in that** temperatures at vehicle speeds which are higher than a limiting speed are used exclusively for the determination of the average outside temperature.

16. Method according to Claim 15, **characterized in that** an actual temperature of the tyre is acquired, and the actual pressure at the actual temperature is converted to an actual pressure under operating conditions.

17. Method according to one of Claims 15 or 16, **characterized in that** the setpoint pressure under the operating condition is determined as a function of a load, wherein at least one full-load mode and one partial-load mode are differentiated.

18. Method according to one of Claims 15 to 17, **characterized in that** setpoint pressures for at least two different sets of tyres are stored in a memory unit (3), and the setpoint pressure under the operating condition is determined as a function of the set of tyres of the memory unit (3).

19. Method according to one of Claims 15 to 18, **characterized in that** differences in limiting values are detected and indicated or displayed.

20. Method according to one of Claims 15 to 19, **characterized in that** the operating conditions are indicated or displayed visually.

21. Method according to one of Claims 15 to 20, **characterized in that** at least one cold inflation pressure can be indicated or displayed numerically.

22. Method according to one of Claims 15 to 21, **characterized in that** the wheel electronic system transmits the actual temperature and the actual pressures to the central control device (1) in a wirefree fashion.

23. Method according to Claim 22, **characterized in that** the wheel electronic systems (21-25) additionally transmit an identifier.

24. Method according to Claim 23, **characterized in that** the central control device (1) identifies the vehicles tyres (11-15) which are present from the transmitted identifiers and determines a position of the identified vehicle tyres (11-15) from the signal data.

25. Method according to one of Claims 15 to 24, **characterized in that** the wheel electronic systems (21-25) additionally transmit the charge state of an assigned local energy store to the central control device (1).

26. Method according to one of Claims 15 to 25, **characterized in that** the transmitting cycle of the wheel electronic systems (21-25) is increased in the event of rapid pressure losses.

## Revendications

1. Dispositif de contrôle électronique de la pression des pneus, comprenant un système électronique de roue à l'aide duquel au moins une pression réelle peut être déterminée dans un pneu de véhicule, un appareil de commande central, une unité de mémorisation dans laquelle au moins une pression théorique est mémorisée dans des conditions de référence, la pression théorique mémorisée dans l'unité de mémorisation étant convertie par l'appareil de commande central en une pression théorique pour une condition de fonctionnement définie, et au moins une unité de sortie acoustique et/ou visuelle, la condition de fonctionnement déterminée dépendant au moins d'une température extérieure moyenne ;
la différence entre la pression réelle et la pression théorique pour une condition de fonctionnement étant analysée au moins de façon qualitative par l'appareil de commande (1), au moins des différences critiques et non critiques pouvant être différenciées ; et
au moins les différences critiques étant représentées sur l'unité de sortie;
**caractérisé en ce que**
seules les températures mesurées à des vitesses de véhicule supérieures à une vitesse limite sont consultées pour déterminer la température extérieure moyenne.

2. Dispositif selon la revendication 1, **caractérisé en ce que** le système électronique de roue (21-25) détecte une température réelle du pneu et que la pression réelle à la température réelle est convertie en une pression réelle aux conditions de fonctionnement.

3. Dispositif selon l'une quelconque des revendications 1 ou 2, **caractérisé en ce que** la pression théorique à la condition de fonctionnement est déterminée en fonction d'une charge, au moins un fonctionnement en pleine charge et un fonctionnement en charge partielle pouvant être différenciés.

4. Dispositif selon la revendication 3, **caractérisé en ce que** les conditions de fonctionnement en pleine charge ou en charge partielle peuvent être définies à l'aide d'une touche (5).

5. Dispositif selon l'une quelconque des revendications précédentes, **caractérisé en ce que** des pressions théoriques sont mémorisées dans l'unité de mémorisation (3) pour au moins deux jeux de pneus différents et **en ce que** la pression théorique à la condition de fonctionnement est déterminée en fonction du jeu de pneus.

6. Dispositif selon l'une quelconque des revendications précédentes, **caractérisé en ce que** les différences de valeur limite sont détectées et représentées.

7. Dispositif selon l'une quelconque des revendications citées, **caractérisé en ce que** l'unité de sortie est intégrée dans une unité d'affichage et de commande (2) centrale et/ou dans le combiné.

8. Dispositif selon la revendication 7, **caractérisé en ce que** les conditions de fonctionnement sont représentées par l'unité d'affichage et de commande (2) centrale et/ou par le combiné.

9. Dispositif selon l'une quelconque des revendications citées, **caractérisé en ce qu'**au moins une pression de gonflage à froid est représentée de façon numérique.

10. Dispositif selon l'une quelconque des revendications citées, **caractérisé en ce que** le système électronique de roue (21-25) est formé avec un émetteur HF, au moins une antenne (4) étant associée au pneu de véhicule (11-14) monté, les données reçues pouvant être transmises à l'appareil de commande (1) central.

11. Dispositif selon la revendication 10, **caractérisé en ce qu'**un accumulateur d'énergie local est associé au système électronique de roue (21-25).

12. Dispositif selon la revendication 11, **caractérisé en ce que** le système électronique de roue (21-25) transmet l'état de charge de l'accumulateur d'énergie à l'antenne (4).

13. Dispositif selon l'une quelconque des revendications 10 à 12, **caractérisé en ce que** les systèmes électroniques de roue (21-25) transmettent un identifiant à l'aide duquel une reconnaissance de roue spécifique peut être réalisée par l'appareil de commande (1) central.

14. Dispositif selon la revendication 13, **caractérisé en ce qu'**une unité d'analyse de caractéristique de réception des signaux dont on peut déduire de ses signaux une position des pneus de véhicule (11-15) est associée à l'antenne (4).

15. Procédé de contrôle électronique de la pression des pneus, au moins une pression réelle étant déterminée dans un pneu de véhicule et une pression théorique calculée dans des conditions de référence étant convertie en une pression théorique pour une condition de fonctionnement définie, la condition de fonctionnement étant déterminée au moins en fonction d'une température extérieure moyenne ;
la différence entre la pression réelle et la pression théorique à la condition de fonctionnement étant analysée au moins de façon qualitative, au moins des différences critiques et non critiques pouvant être différenciées ; et
au moins des différences critiques acoustiques et/ou visuelles étant représentées ;
**caractérisé en ce que**
seules les températures à des vitesses de véhicule supérieures à une vitesse limite sont consultées pour déterminer la température extérieure moyenne.

16. Procédé selon la revendication 15, **caractérisé en ce qu'**une température réelle du pneu est détectée et **en ce que** la pression réelle à la température réelle est convertie en une pression réelle aux conditions de fonctionnement.

17. Procédé selon l'une quelconque des revendications 15 ou 16, **caractérisé en ce que** la pression théorique à la condition de fonctionnement est déterminée en fonction d'une charge, au moins un fonctionnement en pleine charge et un fonctionnement en charge partielle étant distingués.

18. Procédé selon l'une quelconque des revendications 15 à 17, **caractérisé en ce que** les pressions théoriques pour au moins deux jeux de pneus différents sont mémorisées dans une unité de mémorisation (3) et **en ce que** la pression théorique à la condition de fonctionnement est déterminée en fonction du jeu de pneus de l'unité de mémorisation (3).

19. Procédé selon l'une quelconque des revendications 15 à 18, **caractérisé en ce que** les différences de valeur limite sont détectées et représentées.

20. Procédé selon l'une quelconque des revendications 15 à 19, **caractérisé en ce que** les conditions de fonctionnement sont représentées de façon visuelle.

21. Procédé selon l'une quelconque des revendications 15 à 20, **caractérisé en ce qu'**au moins une pression de gonflage à froid peut être représentée de façon numérique.

22. Procédé selon l'une quelconque des revendications 15 à 21, **caractérisé en ce que** le système électronique de roue transmet la température réelle et les pressions réelles sans fil à l'appareil de commande (1) central.

23. Procédé selon la revendication 22, **caractérisé en ce que** les systèmes électroniques de roue (21-25) transmettent en outre un identifiant.

24. Procédé selon la revendication 23, **caractérisé en ce que** l'appareil de commande (1) central identifie à partir de l'identifiant envoyé les pneus de véhicule (11-15) présents et détermine à partir des données signalétiques la position du pneu de véhicule (11-15) identifié.

25. Procédé selon l'une quelconque des revendications 15 à 24, **caractérisé en ce que** les systèmes électroniques de roue (21-25) transmettent en outre à l'appareil de commande (1) central l'état de charge d'un accumulateur d'énergie local associé.

26. Procédé selon l'une quelconque des revendications 15 à 25, **caractérisé en ce que** le cycle d'envoi des systèmes électroniques de roue (21-25) est accru en cas de pertes de pression rapides.
